Europäisches Patentamt

European Patent Office

Office européen des brevets

(19)

(11) Veröffentlichungsnummer: **0 022 985**
**B1**

(12) # EUROPÄISCHE PATENTSCHRIFT

(45) Veröffentlichungstag der Patentschrift:
14.12.83

(21) Anmeldenummer: **80103934.8**

(22) Anmeldetag: **09.07.80**

(51) Int. Cl.³: **H 04 L 11/06**, H 04 L 5/22,
H 04 Q 9/00

(54) Schaltungsanordnung zur Erkennung vorgegebener Binärwerte bestimmter Mindestdauer.

(30) Priorität: **18.07.79 DE 2929079**

(43) Veröffentlichungstag der Anmeldung:
**28.01.81 Patentblatt 81/4**

(45) Bekanntmachung des Hinweises auf die Patenterteilung:
**14.12.83 Patentblatt 83/50**

(84) Benannte Vertragsstaaten:
**AT BE GB IT NL SE**

(56) Entgegenhaltungen:
**AT - B - 348 030**
**DE - A - 2 742 525**
**DE - A - 2 744 119**
**DE - A - 2 846 722**
**DE - B - 2 333 137**

(73) Patentinhaber: **SIEMENS AKTIENGESELLSCHAFT,**
**Berlin und München Wittelsbacherplatz 2,**
**D-8000 München 2 (DE)**

(72) Erfinder: **Wilmers, Gerhard, Dipl.-Phys.,**
**Fasangartenstrasse 162, D-8000 München 90 (DE)**

Schaltungsanordnung zur Erkennung vorgegebener Binärwerte bestimmter Mindestdauer

Die Erfindung bezieht sich auf eine Schaltungsanordnung für die Erkennung von Binärwerten, die während einer bestimmten Mindestdauer von Datenquellen an eine gemeinsame Datenleitung abgegeben werden, mit einem periodisch arbeitenden Adressengeber, der zeitlich aufeinanderfolgend Datenquellen-Adressen erzeugt, die einerseits an einen Adressendecodierer abgegeben werden, der entsprechend den Datenquellen-Adressen die einzelnen Datenquellen zeitlich nacheinander über Schalter mit der Datenleitung zu verbinden gestattet, und durch die andererseits den Datenquellen individuell zugeordnete Zähleinrichtungen angesteuert werden, die bei Erreichen vorgegebener Zählerstände vorbestimmte Binärwerte als Erkennungssignale abgeben.

Aus der AT-PS 348030 ist eine Schaltungsanordnung zur Zeitmultiplexübertragung von Binärsignalen, die von Datenquellen abgegeben werden, bekannt. Diese bekannte Schaltungsanordnung weist einen Adressengeber auf, der zeitlich aufeinanderfolgend Datenquellen-Adressen erzeugt, die einerseits an je eine Zähleinrichtung und andererseits an einen Multiplexer abgegeben werden. Der Multiplexer erzeugt entsprechend den Datenquellen-Adressen Schaltsignale, durch die Datenquellen an eine gemeinsame Datenleitung angeschlossen werden. Weiterhin sind Zähleinrichtungen vorgesehen, die bei Erreichen vorgegebener Zählerstände bestimmte Erkennungssignale abgeben.

Die Zähleinrichtungen der bekannten Schaltungsanordnung stellen eine Einphasungseinrichtung dar, mit deren Hilfe die von den Datenquellen abgegebenen Fernschreib-Zeichen bitweise abgetastet werden. Die auf diese Weise gewonnenen Abtastwerte werden dann in Form eines bitverschachtelten Zeitmultiplexsignals weitergeleitet. Die Abtastung erfolgt dabei nach dem Prinzip der Schrittmittenabtastung. Zur Ermittlung der Schrittmitten (Bitmitten) wird bei der Abgabe eines Startschrittes von einer der Datenquellen eine dieser Datenquelle zugeordnete Zähleinrichtung aktiviert, die mit jeder Adressierung der betreffenden Datenquelle einen Zählerstand erhöht und diesen bis zur nächsten Adressierung zwischenspeichert. Bei Erreichen eines vorgegebenen Zählerstandes, der einer Schrittmitte (Bitmitte) entspricht, wird von der Zähleinrichtung ein Steuersignal abgegeben, mit dessen Hilfe der Binärwert des Bits abgetastet wird. Nach der Abgabe dieses Steuersignals wird mit jedem Adressiervorgang der Zählerstand der betreffenden Zähleinrichtung erhöht, so dass in der Folge jedes Bit des von der zugehörigen Datenquelle abgegebenen Fernschreib-Zeichens einmal abgetastet wird.

Zur Ermittlung der einzelnen Bits eines Fernschreib-Zeichens dient eine weitere Zähleinrichtung, die durch die von der zuvor genannten Zähleinrichtung abgegebenen Steuersignale gesteuert wird. Bei Erreichen eines vorgegebenen Zählerstandes, der der Anzahl der Bits eines Fernschreib-Zeichens entspricht, kehren die beiden Zähleinrichtungen in ihre Grundstellung zurück, in der sie bis zur Abgabe eines weiteren Fernschreib-Zeichens durch die zugehörige Datenquelle verbleiben.

Da die zuvor erwähnten Zähleinrichtungen lediglich bei Auftreten eines Startschrittes aktiviert werden und nach der Aktivierung unabhängig von den Binärwerten der einzelnen Bits eines Fernschreib-Zeichens nur die Schrittmittenabtastung bewirken, ist die bekannte Schaltungsanordnung nicht geeignet, das Auftreten von Binärwerten, die während einer bestimmten Mindestdauer von den Datenquellen abgegeben werden, zu signalisieren.

Aus der DE-OS 2742525 ist eine Schaltungsanordnung zur Ermittlung von in ihrer Dauer eine vorgegebene Mindestdauer überschreitenden Eingangssignalen bekannt. Diese bekannte Schaltungsanordnung dient insbesondere zur Erkennung von auf Einzelleitungen auftretenden Anrufsignalen in Fernschreibvermittlungsanlagen. Hierzu enthält die bekannte Schaltungsanordnung im wesentlichen einen als Verzögerungslied dienenden Zähler, dem die auf der Einzelleitung auftretenden Eingangssignale zugeführt werden. Wird diesem Zähler ein bestimmtes Eingangssignal während einer vorgegebenen Mindestdauer zugeführt, so gibt dieser Zähler bei einem festgelegten Zählerstand ein Steuersignal ab, welches die Weiterleitung des noch am Eingang des Zählers anliegenden Eingangssignals bewirkt. Nach der Abgabe dieses Steuersignals kehrt der Zähler in seine Grundstellung zurück. Wird der Zähler durch ein Eingangssignal aktiviert, dessen Dauer kürzer als eine vorgegebene Mindestdauer ist, so kehrt dieser Zähler vorzeitig in seine Grundstellung zurück.

Die aus der DE-OS 2742525 bekannte Schaltungsanordnung hat für den allgemeinen Anwendungsfall den Nachteil, dass mit ihr lediglich ein fest vorgegebener Binärwert überwacht werden kann. Bei Verwendung dieser bekannten Schaltungsanordnung in Zeitmultiplexsystemen ergibt sich zusätzlich der Nachteil eines erheblichen schaltungstechnischen Aufwandes, da die bekannte Schaltungsanordnung in diesem Fall für jede der an die Zeitmultiplexsysteme angeschlossenen Leitungen vorzusehen ist.

Der Erfindung liegt nun die Aufgabe zugrunde, einen Weg zu zeigen, wie bei einer Schaltungsanordnung der eingangs genannten Art Binärwerte, die von mehreren Datenquellen während einer bestimmten Mindestdauer abgegeben werden, signalisiert werden können.

Gelöst wird die vorstehend aufgezeigte Aufgabe bei einer Schaltungsanordnung der eingangs genannten Art erfindungsgemäss dadurch, dass in den Zähleinrichtungen zusätzlich zu den Zählerständen Binärwerte gespeichert sind, welche den von den zugehörigen Datenquellen gerade abgegebenen bzw. noch abzugebenden Binärwerten entsprechen, dass ein erster Vergleicher vorgesehen ist, der die auf der Datenleitung auftretenden Binärwerte mit den in den Zähleinrichtungen gespeicherten Binärwerten vergleicht und entsprechende Steuersignale für die Änderung der Zählerstände abgibt, dass ein zweiter Vergleicher vorgesehen ist, der die in den Zähleinrichtungen gespeicherten Binärwerte mit den von den Zähleinrichtungen abgegebenen Binärwerten vergleicht und dass die beim Vergleich der Binärwerte am Ausgang des zweiten Vergleichers auftretenden Binärwerte als nächste zu bewertende Binärwerte in die Zähleinrichtungen übernommen werden.

Die Erfindung bringt den Vorteil mit sich, dass mit einem relativ geringen schaltungstechnischen Aufwand aufeinanderfolgende Binärwerte einer bestimmten Mindestdauer erkannt und durch entsprechende Erkennungssignale signalisiert werden können. Als Datenquellen können dabei beispielsweise Fernschreibgeräte vorgesehen sein, insbesondere dann, wenn sie im Rahmen eines Zeitmultiplexsystems geschaltet sind. Sendet ein solches Fernschreibgerät im Zuge eines Verbindungsaufbaues während einer Dauer von mindestens 50 ms ein 1-Signal als Rufanforderung aus, so kann diese Rufanforderung mit der vorliegenden Schaltungsanordnung erkannt und mit einem einzigen Erkennungssignal signalisiert werden. Nach der Abgabe eines solchen Erkennungssignals wird dann das Auftreten eines O-Signals der vorgegebenen Mindestdauer überwacht. Als Datenquellen können ausser Fernschreibgeräten auch Magnetbandabtaster, Lochstreifenleser, Lochkartenleser, Messwertgeber und beliebige weitere Datenquellen vorgesehen sind, gleichgültig, ob sie ihre Daten in synchroner oder asynchroner Weise abgeben.

Um die Zähleinrichtungen, insbesondere dann rationell zu erstellen, wenn eine Vielzahl von Datenquellen vorgesehen ist, ist es zweckmässig, dass die Zähleinrichtungen aus einem adressierten Speicher und einem Zählregister gebildet sind, dass der adressierbare Speicher mit den Datenquellen-Adressen adressiert ist, dass der adressierbare Speicher die Zählerstände speichert und bei jedem Aufruf der betreffenden Datenquellen-Adressen über seine Ausgänge an das Zählregister abgibt und dass die Zählerstände in Abhängigkeit von den am Ausgang des ersten Vergleichers auftretenden Steuersignalen verändert werden und die resultierenden Zählerstände des Zählregisters in den adressierbaren Speicher rückgespeichert werden.

Für einen geringen Steuerungsaufwand ist es zweckmässig, dass das Zählregister einen Zähleingang, einen Rücksetzeingang und einen Ausgang aufweist, dass der Zähleingang die Steuersignale des ersten Vergleichers zugeführt erhält, dass der Rücksetzeingang den Steuersignalen des ersten Vergleichers inverse Signale zugeführt erhält und dass von dem Ausgang die Erkennungssignale abgegeben werden.

Falls bei der Erkennung der Binärwerte eine von diesen Binärwerten abhängige Mindestdauer berücksichtigt werden soll, ist es zweckmässig, dass ein Festwertspeicher vorgesehen ist, der Anfangszählerstände speichert und in Abhängigkeit von den am Ausgang des zweiten Vergleichers auftretenden Binärwerten Anfangszählerstände abgibt, dass eine Schalteinrichtung vorgesehen ist, die bei Ungleichheit der auf der Datenleitung auftretenden Binärwerte und der in den Zähleinrichtungen gespeicherten Binärwerte oder bei Auftreten der Erkennungssignale die vom Festwertspeicher abgegebenen Anfangszählerstände zum adressierbaren Speicher hindurchlässt und die bei Gleichheit der auf der Datenleitung auftretenden Binärwerte und der in den Zähleinrichtungen gespeicherten Binärwerte und bei nichterfolgter Abgabe der Erkennungssignale die resultierenden Zählerstände des Zählregisters hindurchlässt.

Falls bei jeder Datenquelle mehrere Alternativen hinsichtlich der Mindestdauer der Binärwerte möglich sein sollen, ist es zweckmässig, dass ein weiterer Adressengeber vorgesehen ist, der pro Datenquellen-Adresse je eine von mehreren Festwertspeicher-Adressen abgibt, und dass mit den Festwertspeicher-Adressen und mit den am Ausgang des zweiten Vergleichers auftretenden Binärwerten die Anfangszählerstände des Festwertspeichers adressiert werden.

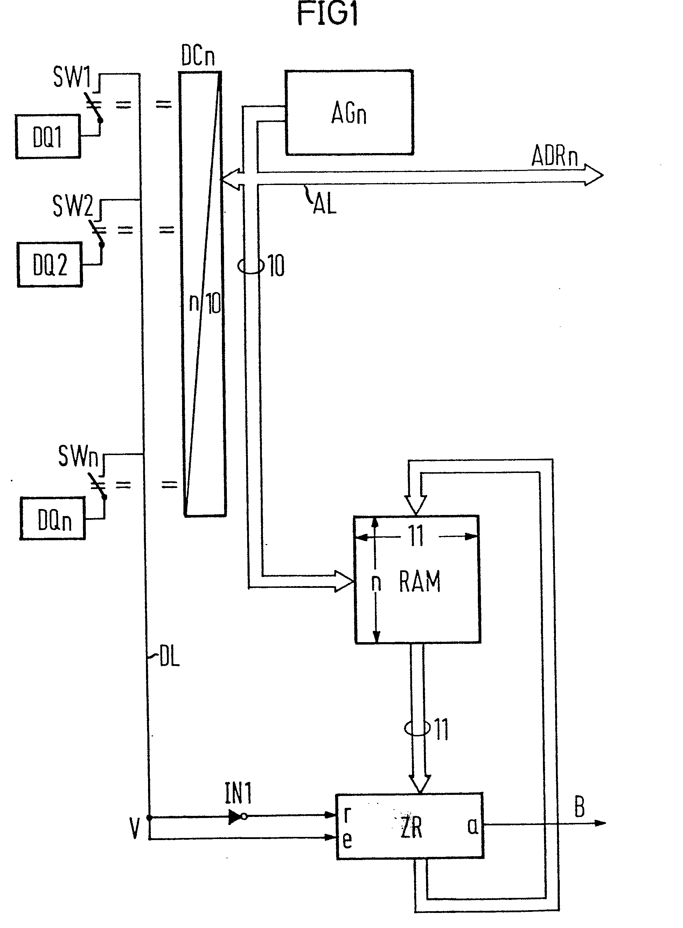

Im folgenden werden Ausführungsbeispiele der Erfindung anhand der Fig. 1 bis 5 beschrieben, wobei in mehreren Figuren dargestellte gleiche Gegenstände mit gleichen Bezugzeichen bezeichnet sind. Alle Figuren zeigen Schaltungsanordnungen zur Erkennung vorgegebener Binärwerte bestimmter Mindestdauer. Insbesondere zeigt:

Fig. 1 die Erkennung eines einzigen vorgegebenen Binärwertes, wobei für alle Binärwerte die gleiche Mindestdauer gilt,

Fig. 2 eine Schaltungsanordnung, mit Hilfe der die vorgegebenen Binärwerte fallweise wählbar sind,

Fig. 3 eine Schaltungsanordnung, mit der beide Möglichkeiten von Binärwertwechseln jeweils ein einziges Mal gemeldet werden,

Fig. 4 eine Schaltungsanordnung, mit Hilfe der den beiden möglichen Binärwerten je eine verschiedene Mindestdauer zugeordnet werden kann und

Fig. 5 eine Schaltungsanordnung, mit Hilfe der pro Datenquelle verschiedene Werte der Mindestdauer berücksichtigt werden können.

Fig. 1 zeigt die Datenquellen DQ1, DQ2 ... DQn. Zwecks einfacherer Darstellung sind nur drei Datenquellen eingezeichnet, wogegen in der Praxis hunderte derartiger Datenquellen vorgesehen sein können. Den insgesamt n Datenquellen sind je die Schalter SW1, SW2 bis SWn zugeordnet. Die Datenquellen sind über diese Schalter an die Datenleitung DL anschaltbar.

Der Adressengeber AGn erzeugt pro Datenquelle je eine Adresse ADRn. Insgesamt werden periodisch zeitlich nacheinander n Datenquellen-Adressen ADRn über die Adressenleitungen AL abgegeben. Bei diesem Ausführungsbeispiel wird angenommen, dass die Adressen ADRn aus je zehn Bits bestehen, die parallel über zehn Adressenleitungen AL einerseits dem Adressdecodierer DCn und andererseits dem adressierbaren Speicher RAM zugeführt werden. Die Ziffer 10 erinnert an die insgesamt zehn Adressleitungen AL.

Der Adressdecodierer DCn decodiert die ihm zugeführten Adressen ADRn und erzeugt insgesamt n Schaltsignale, mit Hilfe derer zeitlich nacheinander die Schalter SW1, SW2 bis SWn kurzzeitig geschlossen werden. Bei Aufruf einer der Adressen ADRn des Adressengebers AGn ist somit die Datenleitung DL kurzzeitig mit der adressierten Datenquelle verbunden.

Im adressierbaren Speicher RAM sind insgesamt n Zählworte mit je 11 Bits gespeichert. Jeder Datenquelle ist eines dieser Zählworte zugeordnet und bei Aufruf einer Adresse ADRn wird das der Adresse und der Datenquelle zugeordnete Zählwort vom Speicher RAM abgegeben. Die im Speicher RAM gespeicherten Zählworte können auch als Zählerstände angesehen werden, da die insgesamt n Wortzellen des Speichers RAM in Kombination mit dem Zählregister ZR je n Zähleinrichtungen bilden. Die jeweiligen Zählerstände dieser Zähleinrichtungen sind in den n Wortzellen des Speichers RAM gespeichert. Die im Speicher RAM gespeicherten Zählerstände werden über insgesamt elf Leitungen parallel dem Zälregister ZR zugeführt.

Das Zählregister ZR besitzt einen Zähleingang e, einen Rücksetzeingang r und einen Ausgang a. Mit einem 1-Signal am Zähleingang e wird der Zählerstand des Zählregisters erhöht. Mit einem 1-Signal am Rücksetzeingang r wird der Zählerstand des Zählregisters ZR auf einen Anfangszählerstand zurückgesetzt. Bei Erreichen eines vorgegebenen Zählerstandes wird über den Ausgang a das Erkennungssignal B abgegeben.

Die Datenquellen DQ1 bis DQn geben jeweils entweder 1-Werte oder 0-Werte ab. Es wird angenommen, dass die 1-Werte signalisiert werden sollen, falls sie während einer bestimmten Mindestdauer von einer bestimmten Datenquelle abgegeben werden.

Bei Aufruf einer der Adressen ADRn ist im Zählregister der zugeordnete Zählerstand gespeichert, am Zähleingang e liegt der Binärwert V der zugeordneten Datenquelle an und am Rücksetzeingang r liegt der mit dem Inverter IN1 invertierte Binärwert der zugeordneten Datenquelle an. Wenn die Datenquelle beispielsweise einen Wert V=1 angibt, dann wird der Zählerstand des Zählregisters ZR um eine Einheit erhöht und der erhöhte Zählerstand wird wieder in den Speicher RAM rückgespeichert. Falls die Datenquelle einen Wert V=0 abgibt, dann wird mit dem 1-Signal am Rücksetzeingang r der Zählerstand des Zählregisters zurückgesetzt und der entsprechende Anfangszählerstand wird in den Speicher RAM übernommen. Falls bei den wiederholten Aufrufen einer der Adressen ADRn immer wieder 1-Werte am Zählregister e anliegen, dann erhöht sich der Zählerstand des Zählregisters ZR, bis schliesslich der vorgegebene Zählerstand erreicht wird und das Erkennungssignal B abgegeben wird. Dieses Erkennungssignal B signalisiert, dass die zugeordnete Datenquelle während einer bestimmten Mindestdauer 1-Werte abgegeben hat. Die Mindestdauer ist abhängig von der Zahl n, von der Dauer der einzelnen Adressen ADRn, vom gewählten Anfangszählerstand und vom gewählten Endzählerstand, bei dem das Erkennungssignal B abgegeben wird. Beispielsweise kann als Anfangszählerstand der Zählerstand 00000000000 gewählt werden und als Endzählerstand kann die Zahl 11111111111 gewählt werden, bei der über den Ausgang a als Überlaufsignal das Erkennungssignal B abgegeben wird. Nach Abgabe des Erkennungssignals B wird der Zählerstand des Zählers ZR auf den Anfangszählerstand zurückgesetzt. Falls die betreffende Datenquelle die 1-Werte genügend lange abgibt, kann der Endzählerstand mehrmals erreicht werden, wobei jedesmal ein Erkennungssignal B abgegeben wird.

Die aus dem Speicher RAM und dem Zählregister ZR gebildeten n Zähleinrichtungen werden für alle n Adressen ADRn gesondert betrieben, so dass beispielsweise ein der Datenquelle DQ2 zugeordnetes Erkennungssignal B abgegeben wird, wogegen weitere – den übrigen Datenquellen zugeordnete – Erkennungssignale nicht abgegeben werden. Um zu signalisieren, welcher Datenquelle das jeweils abgegebene Erkennungssignal B zugeordnet ist, wird gleichzeitig mit dem Erkennungssignal B auch die zugeordnete Adresse ADRn abgegeben. Wenn als Datenquelle DQ2 beispielsweise ein Fernschreiber vorgesehen ist und die Mindestdauer mit 50 ms festgelegt ist, dann wird durch das entsprechende Erkennungssignal B signalisiert, dass der betreffende Fernschreiber mindestens während einer Dauer von 50 ms 1-Signale abgibt und eine Rufanforderung vorliegt.

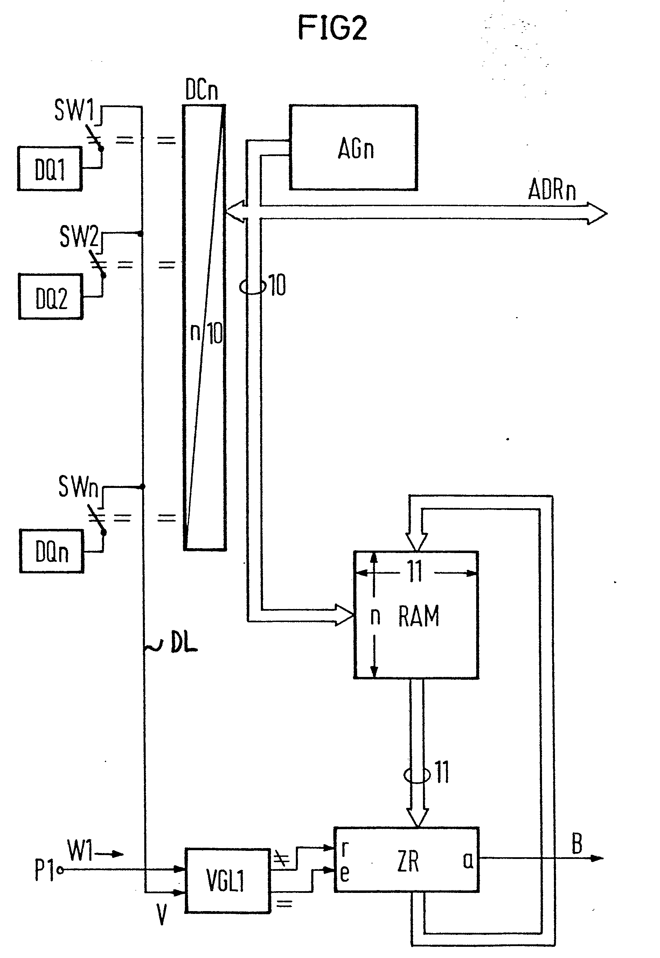

Gemäss Fig. 2 ist zusätzlich zu den in Fig. 1 dargestellten Bauteilen der Vergleicher VGL1 vorgesehen. Einem Eingang dieses Vergleichers werden die von den Datenquellen abgegebenen Binärwerte V zugeführt. Über den Schaltungspunkt P1 liegt der Binärwert W1 an einem zweiten Eingang des Vergleichers VGL1. Bei Gleichheit der beiden Binärwerte V und W1 wird über einen Ausgang des Vergleichers ein 1-Signal an den Zähleingang e abgegeben. Bei Ungleichheit der beiden Binärwerte V und W1 wird über den anderen Ausgang ein 1-Signal an den Rücksetzeingang r abgegeben. Der Vergleicher VGL1 ermöglicht eine Einstellung desjenigen Binärwertes, auf den die Schaltungsanordnung ansprechen soll und bei dessen Mindestdauer das Erkennungssignal B abgegeben werden soll. Mit V=1 und W1=1 werden beispielsweise die Zählerstände des Zählregisters ZR erhöht, wogegen mit V=0 und mit W1=1 eine Rücksetzung des Zählerstandes erfolgt. Mit dem Signal W1=1 werden somit nur die 1-Werte des Signals V berücksichtigt. Wenn dagegen über den Schaltungspunkt P1 mit W1=0 dauernd 0-Werte abgegeben werden, dann werden nur die 0-Werte des Signals V berücksichtigt und es wird nur dann ein entsprechendes Erkennungssignal B abgegeben, wenn die 0-Binärwerte während einer bestimmten Mindestdauer von der zugeordneten Datenquelle abgegeben werden.

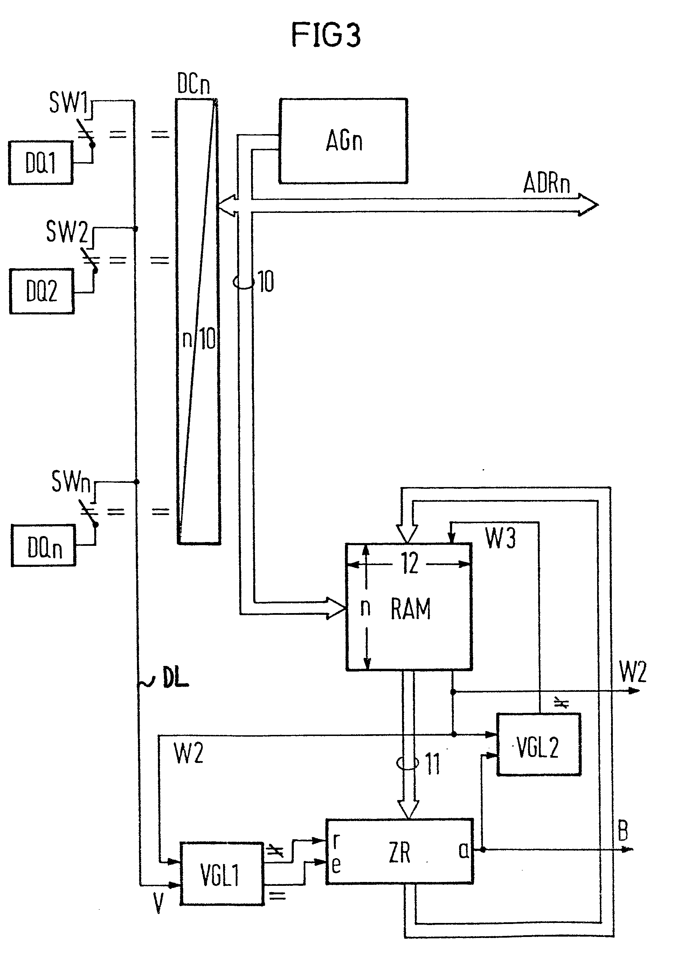

Fig. 3 zeigt zusätzlich zu den in Fig. 2 dargestellten Gegenständen einen weiteren Vergleicher VGL2, der bei Ungleichheit der beiden eingangs zugeführten Binärwerte ein 1-Signal an den Speicher RAM abgibt. In diesem Fall wird jeder Adresse ADRn mit Hilfe des Speichers RAM ein Wort zugeordnet, das einerseits mit elf Bits aus dem zugeordneten Zählerstand und mit einem Bit aus dem zugeordneten Binärwert des Signals W2 gebildet wird. Die in Fig. 3 dargestellte Schaltungsanordnung signalisiert sowohl 1-Werte als auch 0-Werte des Signals V, falls diese während der vorgegebenen Mindestdauer auftreten. Die Wirkungsweise der in Fig. 3 dargestellten Schaltungsanordnung ist aus der Tabelle 1 ersichtlich.

|    | V | W2 | VGL1 | B | VGL2 | W3 | AZ |
|----|---|----|----|----|------|----|-----|
| 10 | 0 | 0 | = | 0 | = | 0 | |
| 11 | 0 | 0 | = | 1 | ≠ | 1 | AZ1 |
| 12 | 0 | 1 | ≠ | 0 | ≠ | 1 | AZ1 |
| 13 | 0 | 1 | ≠ | 0 | ≠ | 1 | AZ1 |
| 14 | 1 | 1 | = | 0 | ≠ | 1 | |
| 15 | 1 | 1 | = | 1 | = | 0 | AZO |
| 16 | 1 | 0 | ≠ | 0 | = | 0 | AZO |
| 17 | 1 | 0 | ≠ | 0 | = | 0 | AZO |

Tabelle 1

In Tabelle 1 wird gemäss Zeile 10 davon ausgegangen, dass mit V=0 und mit W2=0 der Vergleicher VGL1 die Gleichheit der beiden Signale feststellt und der Zählerstand des Zählregisters ZR erhöht wird, ohne jedoch seinen Endzählerstand zu erreichen. Es wird daher das Signal B=0 abgegeben, so dass sich durch Vergleich der beiden Signale W2 und B mit Hilfe des Vergleichers VGL2 das Signal W3=0 ergibt.

Es wird weiterhin ab Zeile 10 bis Zeile 13 das Signal V=0 vorausgesetzt. Das Signal W2 gleicht dem Signal W3 der vorhergehenden Zeile. Gemäss Zeile 11 erkennt der Vergleicher VGL1 die Gleichheit der beiden Signale V und W2 und bei Erreichung des Endstandes wird vom Zählregister ZR das Erkennungssignal B=1 abgegeben. Durch die gleichzeitige Abgabe des Signals W2=0 wird signalisiert, dass sich dieses Erkennungssignal B=1 auf das Binärsignal V=0 bezieht. Durch die gleichzeitige Abgabe der zugeordneten Adresse ADRn wird die zugeordnete Datenquelle signalisiert. Der Vergleicher VGL2 stellt die Ungleichheit der beiden Binärwerte W2 und B fest und gibt das Signal W3=1 ab.

Gemäss Zeile 12 wird bei Ungleichheit der beiden Signale V und W2 der Zählerstand des Zählregisters ZR zurückgesetzt, wenn der Anfangszählerstand nicht eingestellt sein sollte. Es wird daher das Signal B=0 abgegeben und das Signal W3=1.

Falls gemäss Zeile 13 weiterhin der Binärwert V=0 auftritt, ändern sich die übrigen Binärwerte nicht. Unter dieser Voraussetzung wird der Endstand des Zählregisters ZR nicht mehr erreicht und das Erkennungssignal B=1 wurde gemäss Zeile 11 nur ein einziges Mal abgegeben.

Ab Zeile 14 bis Zeile 17 wird das Signal V=1 vorausgesetzt. Mit dem Signal W3=1 gemäss Zeile 13 ergibt sich das Signal W2=1 gemäss Zeile 14. Bei Gleichheit der beiden Binärwerte V und W2 zählt das Zählregister ZR, hat aber noch nicht seinen Endstand erreicht und gibt das Signal B=0 ab. Der Vergleicher VGL2 stellt die Ungleichheit der beiden Signale W2 und B fest und gibt das Signal W3=1 ab.

Gemäss Zeile 15 erreicht das Zählregister seinen Endstand und gibt das Erkennungssignal B=1 ab. Durch die gleichzeitige Abgabe des Signals W2=1 wird signalisiert, dass sich dieses Erkennungssignal B=1 auf den Binärwert V=1 bezieht. Die gleichzeitig abgegebene Adresse ADRn signalisiert wieder die zugeordnete Datenquelle. Bei Gleichheit der beiden Binärwerte W2 und B gibt der Vergleicher VGL2 das Signal W3=0 ab.

Gemäss Zeile 16 wird bei Ungleichheit der beiden Binärwerte V und W2 der Zählerstand des Zählregisters ZR zurückgesetzt und das Signal B=0 abgegeben. Damit ergibt sich auch das Signal W3=0, das so lange nicht geändert wird, solange der Binärwert V=1 ist, wie die Zeile 17 zeigt. Mit dem Erkennungssignal B=1 wird also gemäss Zeile 15 nur ein einziges Mal die Überschreitung der Mindestdauer durch den Binärwert V=1 signalisiert.

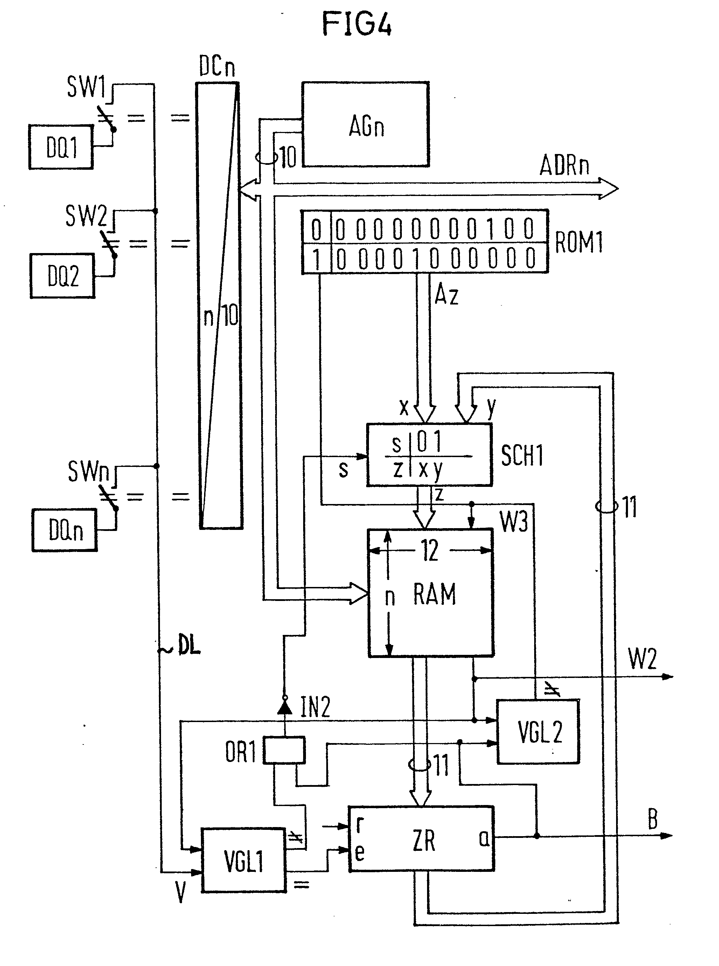

Fig. 4 zeigt zusätzlich zu den Gegenständen der Fig. 3 den Festwertspeicher ROM1, die Schaltungseinrichtung SCH1, den Inverter IN2 und das ODER-Gatter OR1. Die Signale V, W2, B und W3 werden wieder gemäss Tabelle 1 erzeugt.

Die Schaltungseinrichtung SCH1 erhält das Steuersignal s, das mit Hilfe des Gatters OR1 und mit Hilfe des Inverters IN2 gewonnen wird. Die Schaltungseinrichtung SCH1 hat elf Eingänge x und elf Eingänge y. Mit dem Steuersignal s=o sind die elf Eingänge x mit elf Ausgängen z verbunden, wogegen mit dem Steuersignal s=1 die elf Eingänge y mit den elf Ausgängen z verbunden sind. Das Steuersignal s=1 ergibt sich immer dann, wenn die dem Vergleicher VGL1 zugeführten Signale V und W2 gleich sind und wenn gleichzeitig das Signal B=0 abgegeben wird. Dies sind die Voraussetzungen, auf die sich auch die Zeilen 10 und 14 der Tabelle 1 beziehen. Beim Zählen der Zähleinrichtungen arbeitet die in Fig. 4 dargestellte Schaltungsanordnung wie die in Fig. 3 dargestellte Schaltungsanordnung, weil die Zählerstände des Zählregisters ZR über die elf Eingänge y und über die Ausgänge z dem Speicher RAM zugeführt werden.

Wenn jedoch die Signale V und W2 ungleich sind, oder wenn das Erkennungssignal B=1 abgegeben wird, dann ergibt sich das Steuersignal s=0. Auf diese Voraussetzungen beziehen sich auch die Zeilen 11, 12, 13, 15, 16, 17 der Tabelle 1. Unter diesen Voraussetzungen werden – beim Rücksetzen der Zähleinrichtungen – über die Eingänge x die Anfangszählerstände AZ des Festwertspeichers ROM1 über den Ausgang z der Schaltungseinrichtung SCH1 dem Speicher RAM zugeführt. Dabei speichert der Festwertspeicher ROM1 nur zwei Anfangszählerstände AZ, die mit dem Signal W3 adressiert werden. Mit W3=0 wird der obere der beiden Anfangszählerstände AZO, beispielsweise das Wort 00000000000 abgerufen und mit W3=1 wird der untere Anfangszählerstand AZ1, beispielsweise das Wort 00001000000 abgerufen. Auf diese Weise wird in die Zähleinrichtungen, die aus dem Speicher RAM und aus dem Zählregister ZR gebildet werden, ein Anfangszählerstand eingegeben, der vom Binärwert des Signals W3 abhängig ist. Damit dann für verschiedene Binärwerte der Signale W3 und V eine verschiedene Mindestdauer eingestellt werden. Im vorliegenden Fall wurde angenommen, dass bei einem demnächst zu meldenden 0-Wert des Signals V der Anfangszählerstand AZO = 00000000100 eingestellt wird, wogegen bei einem demnächst zu meldenden 1-Wert des Signals V ein Anfangszählerstand von A1 = 00001000000 eingestellt wird.

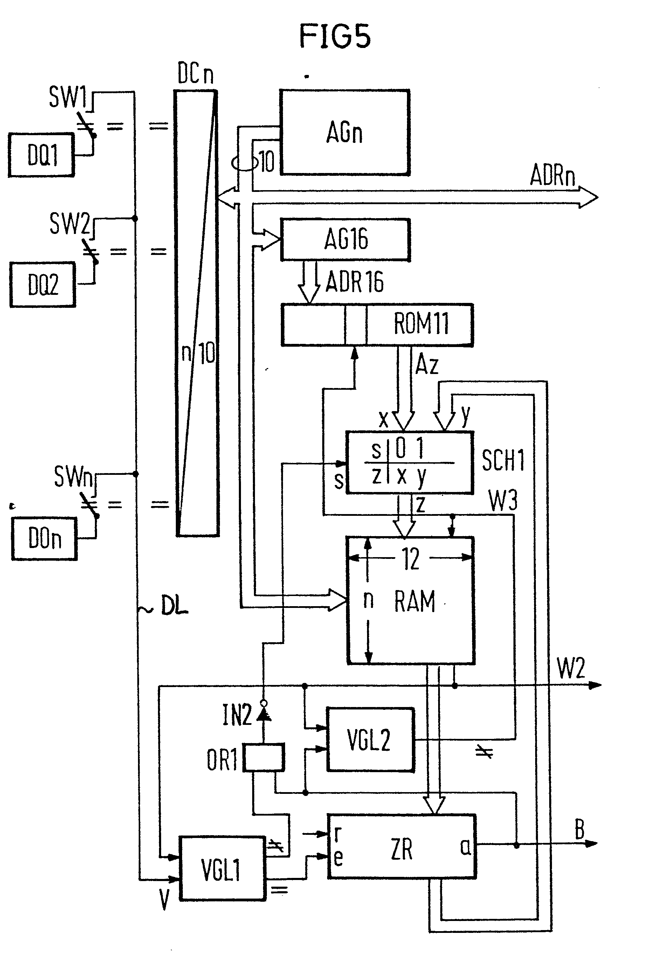

Fig. 5 zeigt zusätzlich zu der in Fig. 4 dargestellten Schaltungsanordnung den Adressengeber AG16, der bei Vorliegen einer der Adressen ADRn eine Adresse ADR16 abgibt. Bei diesem Ausführungsbeispiel wird angenommen, dass jeder Adresse ADRn je eine von 16 Adressen ADR16 zugeordnet werden kann. Diese Zuordnung kann von den Bitraten abhängig sein, mit denen die Daten der Datenquellen DQ1 bis DQn abgegeben werden. Wenn beispielsweise die Datenquellen DQ1 und DQ2 ihre Daten mit der Bitrate B1 und die Datenquelle DQn ihre Daten mit der Bitrate B2 abgibt, dann kann den Adressen ADRn der Datenquellen DQ1 und DQ2 eine der 16 Adressen ADR16 zugeordnet werden und der Adresse der Datenquelle DQn kann eine andere der 16 Adressen ADR16 zugeordnet werden. Als Adressengeber AG16 kann ein Festwertspeicher vorgesehen sein, der n Worte speichern muss.

Das Steuersignal s zum Betrieb der Schaltungseinrichtung SCH1 wird in gleicher Weise wie gemäss Fig. 4 erzeugt. Der Festwertspeicher ROM11 entspricht dem in Fig. 4 dargestellten Festwertspeicher ROM1. Der Festwertspeicher ROM11 wird jedoch mit Adressen zu je fünf Bits gesteuert. Vier Bits stammen von den Adressen ADR16 und das fünfte Bit liefert das Signal W3. Wenn beispielsweise die Adresse ADRn = 000000000001 der Datenquelle DQ1 aufgerufen wird, dann gibt der Adressengeber AG16 eine der 16 möglichen Adressen, beispielsweise die Adresse ADR16 = 1010 ab. Der Festwertspeicher ROM11 wird in diesem Fall mit der Adresse 1010 und mit W3 adressiert. Auf diese Weise lassen sich individuell pro Datenquelle 16 Paare von Anfangswerten einstellen.

**Patentansprüche**

1. Schaltungsanordnung für die Erkennung von Binärwerten, die während einer bestimmten Mindestdauer von Datenquellen (DQ1 bis DQn) an eine gemeinsame Datenleitung (DL) abgegeben werden, mit einem periodisch arbeitenden Adressengeber (AGn), der zeitlich aufeinanderfolgend Datenquellen-Adressen erzeugt, die einerseits an einen Adressendecodierer (DCn) abgegeben werden, der entsprechend den Datenquellen-Adressen die einzelnen Datenquellen (DQ1 bis DQn) zeitlich nacheinander über Schalter (SW1 bis SWn) mit der Datenleitung (DL) zu verbinden gestattet, und durch die andererseits den Datenquellen individuell zugeordnete Zähleinrichtungen (RAM, ZR) angesteuert werden, die bei Erreichen vorgegebener Zählerstände vorbestimmte Binärwerte als Erkennungssignale (B) abgeben, dadurch gekennzeichnet, dass in den Zähleinrichtungen (RAM, ZR) zusätzlich zu den Zählerständen Binärwerte (W2) gespeichert sind, welche den von den zugehörigen Datenquellen (DQ1 bis DQn) gerade abgegebenen bzw. noch abzugebenden Binärwerten entsprechen, dass ein erster Vergleicher (VGL1) vorgesehen ist, der die auf der Datenleitung (DL) auftretenden Binärwerte (V) mit den in den Zähleinrichtungen (RAM, ZR) gespeicherten Binärwerten (W2) vergleicht und entsprechende Steuersignale für die Änderung der Zählerstände abgibt, dass ein zweiter Vergleicher (VGL2) vorgesehen ist, der die in den Zählereinrichtungen (RAM, ZR) gespeicherten Binärwerte (W2) mit den von den Zähleinrichtungen (RAM, ZR) abgegebenen Binärwerten (B) vergleicht, und dass die beim Vergleich der Binärwerte am Ausgang des zweiten Vergleichers (VGL2) auftretenden Binärwerte als nächste zu bewertende Binärwerte (W3) in die Zähleinrichtungen übernommen werden.

2. Schaltungsanordnung nach Anspruch 1, dadurch gekennzeichnet, dass die Zähleinrichtungen (RAM, ZR) aus einem adressierbaren Speicher (RAM) und einem Zählregister (ZR) gebildet sind, dass der adressierbare Speicher (RAM) mit den Datenquellen-Adressen (ADRn) adressiert ist, dass der adressierbare Speicher (RAM) die Zählerstände speichert und bei jedem Aufruf der betreffenden Datenquellen-Adressen (ADRn) über seine Ausgänge an das Zählregister (ZR) abgibt und dass die Zählerstände in Abhängigkeit von den am Ausgang des ersten Vergleichers (VGL1) auftretenden Steuersignalen verändert werden und die resultierenden Zählerstände des Zählregisters (ZR) in den adressierbaren Speicher (RAM) rückgespeichert werden.

3. Schaltungsanordnung nach Anspruch 2, dadurch gekennzeichnet, dass das Zählregister (ZR) einen Zähleingang (e), einen Rücksetzeingang (r) und einen Ausgang (a) aufweist, dass der Zähleingang (e) die Steuersignale des ersten Vergleichers (VGL1) zugeführt erhält, dass der Rücksetzeingang (r) den Steuersignalen des ersten Vergleichers (VGL1) inverse Signale zugeführt erhält, und dass von dem Ausgang (a) die Erkennungssignale (B) abgegeben werden.

4. Schaltungsanordnung nach Anspruch 2 oder 3, dadurch gekennzeichnet, dass ein Festwertspeicher (ROM1) vorgesehen ist, der Anfangszählerstände (AZ) speichert und in Abhängigkeit von den am Ausgang des zweiten Vergleichers (VGL2) auftretenden Binärwerten (W3) Anfangszählerstände (AZ) abgibt, dass eine Schalteinrichtung (SCH1) vorgesehen ist, die bei Ungleichheit der auf der Datenleitung (DL) auftretenden Binärwerte (V) und der in den Zähleinrichtungen gespeicherten Binärwerte (W2) oder bei Auftreten der Erkennungssignale (B) die vom Festwertspeicher abgegebenen Anfangszählerstände (AZ) zum adressierbaren Speicher (RAM) hindurchlässt und die bei Gleichheit der auf der Datenleitung (DL) auftretenden Binärwerte (V) und der in den Zähleinrichtungen gespeicherten Binärwerte (W2) und bei nichterfolgter Abgabe der Erkennungssignale (B) die resultierenden Zählerstände des Zählregisters (ZR) hindurchlässt.

5. Schaltungsanordnung nach Anspruch 4, dadurch gekennzeichnet, dass ein weiterer Adressengeber (AG16) vorgesehen ist, der pro Datenquellen-Adresse (ADRn) je eine von mehreren Festwertspeicher-Adressen (ADR16) abgibt, und dass mit den Festwertspeicher-Adressen (ADR16) und mit den am Ausgang des zweiten Vergleichers (VGL2) auftretenden Binärwerten (W3) die Anfangszählerstände (AZ) des Festwertspeichers (ROM11) adressiert werden.

**Claims**

1. Circuit arrangement for the recognition of binary values which are emitted for a specified minimum time duration by data sources (DQ1 to DQn) to a common data line (DL), with a periodically operating address generator (AGn) which generates a succession of data source addresses, which on the one hand are emitted to an address decoder (DCn) which in accordance with the data source addresses permits the individual data sources (DQ1 to DQn) to be successively connected via switches (SW1 to SWn) to the data line (DL), and which on the other hand drive counting devices (RAM, ZR) which are individually assigned to the data sources and which, when predetermined counts are reached, emit predetermined binary values by way of recognition signals (B), characterized in that in addition to the counts the counting devices (RAM, ZR) store binary values (W2) which correspond to the binary values which have just been emitted or are yet to be emitted by the associated data sources (DQ1 to DQn), that a first comparator (VGL1) is provided which compares the binary values (V) occurring on the data line (DL) with the binary values (W2) stored in the counting devices (RAM, ZR) and emits respective control signals for changing the counts, that a second comparator (VGL2) is provided which compares the binary values (W2) stored in the counting devices (RAM, ZR) with the binary values (B) emitted by the counting devices (RAM, ZR), and that the binary values which occur at the output of the second comparator (VGL2) during the comparison of the binary values are transferred into the counting devices as the next binary values (W3) to be evaluated.

2. Circuit arrangement as claimed in claim 1, characterised in that the counting devices (RAM, ZR) are formed by an addressable store (RAM) and a counting register (ZR), that the addressable store (RAM) is addressed by the data source addresses (ADRn), that the addressable store (RAM) stores the counts which it emits via its outputs to the counting register (ZR) whenever the data source addresses (ADRn) in question are called up, and that the counts are changed in dependence upon the control signals which occur at the output of the first comparator (VGL1) and the resultant counts of the counting register (ZR) are re-stored in the addressable store (RAM).

3. Circuit arrangement as claimed in claim 2, characterized in that the counting register (ZR) has a counting input (e), a reset input (r) and an output (a), that the counting input (e) is supplied with the control signals from the first comparator (VGL1), that the reset input (r) is supplied with the signals which are inverse to the control signals of the first comparator (VGL1), and that the recognition signals (B) are emitted from the output (a).

4. Circuit arrangement as claimed in claim 2 or 3, characterized in that a read-only store (ROM1) is provided which stores starting counts (AZ) and emits starting counts (AZ) in dependence upon the binary values (W3) which occur at the output of the second comparator (VGL2), that a switching device (SCH1) is provided which, in the event that the binary values (V) occurring on the data line (DL) and the binary values (W2) stored in the counting devices are non-identical or on the occurrence of the recognition signals (B), allows the starting counts (AZ) emitted from the read-only store to pass to the addressable store (RAM), and which, in the event that the binary values (V) occurring on the data line (DL) and the binary values (W2) stored in the counting devices are identical and when the recognition signals (B) have not been emitted, allows through the resultant counts of the counting register (ZR).

5. Circuit arrangement as claimed in claim 4, characterized in that a further address generator (AG16) is provided which emits one of a plurality of read-only store addresses (ADR16) in respect of each data source address (ADRn), and that the starting counts (AZ) of the read-only store (ROM11) are addressed by the read-only store addresses (ADR16) and by the binary values (W3) which occur at the output of the second comparator (VGL2).

**Revendications**

1. Montage pour l'identification de valeurs binaires, qui sont délivrées pendant une durée minimale déterminée par des sources de données (DQ1 à DQn) à une ligne commune de transmission de données (DL), comportant un générateur d'adresses (AGn) fonctionnant périodiquement et qui produit successivement dans le temps des adresses de sources de données qui d'une part sont délivrées à un décodeur d'adresses (DCn), qui permet de relier, conformément aux adresses des sources de données, les différentes sources de données (DQ1 à DQn) successivement dans le temps par l'intermédiaire de commutateurs (SW1 à SWn) à la ligne de transmission de données (DL), et à l'aide desquelles d'autre part les sources de données sont commandées par des dispositifs de comptage (RAM, ZR) associés individuellement et qui délivrent des valeurs binaires prédéterminées en tant que signaux d'identification (B), lorsque des états de comptage prédéterminés sont atteints, caractérisé par le fait que dans les dispositifs de comptage (RAM, ZR) sont mémorisées, en plus des états de comptage, des valeurs binaires (W2) qui correspondent aux valeurs binaires précisément délivrées ou devant être encore délivrées par les sources associées de données (DQ1 à DQn), qu'il est prévu un premier comparateur (VGL1) qui compare les valeurs binaires (V) apparaissant dans la ligne de transmission de données (DL) aux valeurs binaires (W2) mémorisées dans les dispositifs de comptage (RAM, ZR) et qui délivre des signaux de commande correspondants pour la modification des états de comptage, qu'il est prévu un second comparateur (VGL2) qui compare les valeurs binaires (W2) mémorisées dans les dispositifs de comptage RAM (ZR) aux valeurs binaires (B) délivrées par les dispositifs de comptage (RAM, ZR) et que les valeurs binaires qui apparaissent, lors de la comparaison des valeurs binaires, à la sortie du second comparateur (VGL2) sont transférées dans les dispositifs de comptage en tant que valeurs binaires (W3) suivantes à évaluer en premier lieu.

2. Montage selon la revendicaiton 1, caractérisé par le fait que les dispositifs de comptage (RAM, ZR) sont formés par une mémoire adressables (RAM), que la mémoire adressable (RAM) est adressée avec les adresses (ADRn) des sources de données, que la mémoire adressable (RAM) mémorise les états de comptage et les délivre par l'intermédiaire de ses sorties au registre de comptage (ZR), lors de chaque appel, des adresses concernées (ADRn) des sources de données, et que les états de comptage sont modifiés en fonction des signaux de commande apparaissant à la sortie du premier comparateur (VGL1) et que les états de comptage résultants du registre de comptage (ZR) sont mémorisés en retour dans la mémoire adressable (RAM).

3. Montage suivant la revendication 2, caractérisé en ce que le registre de comptage (ZR) comporte une entrée de comptage (e), une entrée de remise à l'état initial (r) et une sortie (a), que l'entrée de comptage (e) reçoit les signaux de commande envoyés par le premier comparateur (VGL1), que l'entrée de remise à l'état initial (r) reçoit des signaux inverses aux signaux de commande envoyés par le premier comparateur (VGL1) et que les signaux d'identification (B) sont délivrés par la sortie (a).

4. Montage suivant la revendication 2 ou 3, caractérisé par le fait qu'il est prévu une mémoire morte (ROM1), qui mémorise des états de comptage initiaux (AZ) et délivre des états de comptage initiaux (AZ) en fonction des valeurs binaires (W3) apparaissant à la sortie du second comparateur (VGL2), qu'il est prévu un dispositif de commutation (SCH1) qui, en cas d'inégalité des valeurs binaires (V) apparaissant dans la ligne de transmission de données et des valeurs binaires (W2) mémorisées dans les dispositifs de comptage ou lors de l'apparition des signaux d'identification (B), transmet les états de comptage initiaux (AZ) délivrés par la mémoire morte, à la mémoire adressable (RAM) et qui, en cas d'égalité des valeurs binaires (V) apparaissant dans la ligne de transmission de données et des valeurs binaires (W2) mémorisées dans les dispositifs de comptage et en cas d'absence de délivrance des signaux d'identification (B), laisse passer les états de comptage résultants du registre de comptage (ZR).

5. Montage suivant la revendication 4, caractérisé par le fait qu'il est prévu un autre générateur d'adresse (AG16), qui délivre, pour chaque adresse (ADRn) d'une source de données, respectivement une parmi plusieurs adresses (ADR16) de la mémoire morte, et que les étages de comptage initiaux (AZ) de la mémoire morte (ROM11) sont adressés avec les adresses (ADR16) de la mémoire morte et avec les valeurs binaires (W3) apparaissant à la sortie du second comparateur (VGL2).

FIG1

# FIG2

# FIG 3

FIG4

# FIG5